(19) Europäisches Patentamt European Patent Office Office européen des brevets

(11) **EP 4 513 133 A1**

(12) **EUROPEAN PATENT APPLICATION**
published in accordance with Art. 153(4) EPC

(43) Date of publication:
**26.02.2025 Bulletin 2025/09**

(21) Application number: **22964015.6**

(22) Date of filing: **04.11.2022**

(51) International Patent Classification (IPC):
$G01B\ 7/16$ (2006.01)   $G01L\ 1/22$ (2006.01)
$G01L\ 1/20$ (2006.01)   $G01N\ 27/04$ (2006.01)

(52) Cooperative Patent Classification (CPC):
**G01B 7/16; G01L 1/20; G01L 1/22; G01N 27/04**

(86) International application number:
**PCT/CN2022/129820**

(87) International publication number:
**WO 2024/092705 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Shokz Co., Ltd.
Shenzhen, Guangdong 518108 (CN)**

(72) Inventors:
 • **DENG, Wenjun
  Shenzhen, Guangdong 518108 (CN)**
 • **YUAN, Yongshuai
  Shenzhen, Guangdong 518108 (CN)**
 • **HUANG, Yujia
  Shenzhen, Guangdong 518108 (CN)**
 • **ZHOU, Wenbing
  Shenzhen, Guangdong 518108 (CN)**
 • **LIAO, Fengyun
  Shenzhen, Guangdong 518108 (CN)**
 • **QI, Xin
  Shenzhen, Guangdong 518108 (CN)**

(74) Representative: **Wang, Bo
 Panovision IP
 Ebersberger Straße 3
 85570 Markt Schwaben (DE)**

(54) **SENSING APPARATUS**

(57)   The embodiments of the present disclosure provide a sensor device. The sensor device comprises a sensitive element and a substrate. The substrate is configured to carry the sensitive element. The sensitive element includes a first conductive layer and a sensitive layer. The first conductive layer includes at least two conductive units. The at least two conductive units are arranged in a distributed manner. At least a portion of the sensitive layer is disposed between and in contact with the at least two conductive units. A resistance value of the sensitive element changes in response to bending of the sensor device.

FIG. 1

EP 4 513 133 A1

**Description**

**TECHNICAL FIELD**

The present disclosure relates to the field of sensor technology, and in particular to a sensor device for bending detection.

**BACKGROUND**

With the development of electronic technology, various sensors have been developed, such as acceleration sensors, direction sensors, pressure sensors, tactile sensors, etc., and are widely used in various fields. A bending sensor can detect the bending degree (or bending state) of an elastic plate by detecting the change in force when the elastic plate is bent. At present, the bending sensor has already been used in the fields of robots, wearable devices, virtual sports, etc.

However, the bending sensors currently used are difficult to meet the performance requirements in some special scenarios, such as the requirements of smaller size, higher sensitivity, and better mechanical reliability. Therefore, it is desirable to provide a novel sensor device that is suitable for bending detection in more scenarios.

**SUMMARY**

The embodiments of the present disclosure provide a sensor device. The sensor device may comprise a sensitive element, including a first conductive layer and a sensitive layer, the first conductive layer including at least two conductive units, the at least two conductive units being arranged in a distributed manner, at least a portion of the sensitive layer being disposed between and in contact with the at least two conductive units, and a resistance value of the sensitive element changing in response to bending of the sensor device; and a substrate, configured to carry the sensitive element.

In some embodiments, the first conductive layer may be disposed above the substrate, and the sensitive layer may be at least partially disposed above the first conductive layer.

In some embodiments, a thickness of the first conductive layer may be in a range of 1 $\mu$m-50 $\mu$m.

In some embodiments, a thickness of the sensitive layer may be in a range of 1 $\mu$m-50 $\mu$m.

In some embodiments, the sensitive layer may include a resistance paste. The resistance paste may be formed by mixing conductive particles with a resin matrix.

In some embodiments, microstructures may be disposed on the sensitive layer. The microstructures may include micropores or slits.

In some embodiments, a diameter of each of the micropores may be less than 30 $\mu$m, and a width of each of the slits may be less than 10 $\mu$m.

In some embodiments, the sensitive layer may include at least two sensitive units. The at least two conductive units may include three or more conductive units. The at least two sensitive units and the three or more conductive units may be spaced apart from each other and arranged in contact with each other.

In some embodiments, the three or more conductive units may have the same shape and area, and a spacing between any two adjacent conductive units of the three or more conductive units may be equal.

In some embodiments, the substrate may include a base layer and a second conductive layer that are arranged from top to bottom. A through hole may be disposed on the base layer and configured to conduct the first conductive layer and the second conductive layer.

In some embodiments, a thickness of the base layer may be in a range of 10 $\mu$m-500 $\mu$m.

In some embodiments, the substrate may include an insulating layer, a second conductive layer, and a base layer that are arranged in sequence from top to bottom. A through hole may be disposed on the insulating layer and configured to conduct the first conductive layer and the second conductive layer.

In some embodiments, a thickness of the insulating layer may be in a range of 1 $\mu$m-100 $\mu$m.

In some embodiments, the sensor device may further comprise a protective layer. The protective layer may be configured to cover an outer surface of the sensor device to protect the sensor device.

In some embodiments, a thickness of the protective layer is less than 100 $\mu$m.

Additional features will be described in part in the following description and will become apparent to those skilled in the art by reviewing the following and accompanying drawings, or may be learned by the production or operation of the embodiments. The features of the present disclosure may be realized and obtained by practicing or using various aspects of the methods, tools, and combinations described in the following detailed embodiments.

**BRIEF DESCRIPTION OF THE DRAWINGS**

The present disclosure will be further illustrated by way of exemplary embodiments, which will be described in detail by means of the accompanying drawings. These embodiments are not limiting, and in these embodiments, the same numbering indicates the same structure, where:

FIG. 1 is a schematic diagram illustrating a cross section of an exemplary sensor device according to some embodiments of the present disclosure;
FIG. 2 is a schematic diagram illustrating a cross section of another exemplary sensor device according to some embodiments of the present disclosure;
FIG. 3 is a schematic diagram illustrating a cross section of another exemplary sensor device according to some embodiments of the present disclosure; FIG. 4 is a schematic diagram illustrating a cross section of another exemplary sensor device according to some embodiments of the present disclosure; FIG. 5A is a schematic diagram illustrating a cross section of an exemplary sensor device according to some embodiments of the present disclosure; and FIG. 5B is a top view of the sensor device corresponding to FIG. 5A.

## DETAILED DESCRIPTION

In order to more clearly illustrate the technical solutions of the embodiments of the present disclosure, the accompanying drawings required to be used in the description of the embodiments are briefly described below. Obviously, the accompanying drawings in the following description are only some examples or embodiments of the present disclosure, and it is possible for a person of ordinary skill in the art to apply the present disclosure to other similar scenarios in accordance with these drawings without creative labor. Unless obviously obtained from the context or the context illustrates otherwise, the same numeral in the drawings refers to the same structure or operation.

As shown in the present disclosure and the claims, unless the context clearly suggests an exception, the words "one," "a," "an," "one kind," and/or "the" do not refer specifically to the singular, but may also include the plural. Generally, the terms "including" and "comprising" suggest only the inclusion of clearly identified steps and elements, however, the steps and elements that do not constitute an exclusive list, and the method or apparatus may also include other steps or elements. The term "based on" means "based at least in part on." The term "one embodiment" means "at least one embodiment"; the term "another embodiment" means "at least one other embodiment."

In the description of the present disclosure, it should be understood that the terms "first," "second," etc. are used for descriptive purposes only and should not be understood as indicating or implying relative importance or implicitly indicating the number of technical features indicated. Therefore, the definition of "first," "second," etc. may explicitly or implicitly include at least one of the features. In the description of the present disclosure, the meaning of "plurality" is at least two, such as two, three, etc., unless otherwise clearly and specifically defined.

For ease of description, the directions "up," "down," "left," and "right" involved in the embodiments of the present disclosure may be represented by a coordinate system XX'YY'. Specifically, "up" refers to the direction toward arrow Y, "down" refers to the direction toward arrow Y', "left" refers to the direction toward arrow X', and "right" refers to the direction toward arrow X. In the description of the present disclosure, it should be understood that the orientations or positional relationships indicated by the terms "length," "width," "thickness," "up," "down," "left," and "right" are based on the orientations or positional relationships shown in the accompanying drawings, and are only for the convenience of describing the present disclosure and simplifying the description, rather than indicating or implying that the device or element referred to must have a specific orientation, be constructed and operated in a specific orientation, and therefore cannot be understood as a limitation to the present disclosure.

In addition, in the present disclosure, unless otherwise clearly specified and limited, the terms "installation," "set," "connection," "fixing," or the like, should be understood in a broad sense. For example, "connection" refers to fixed connection, detachable connection, or integration; mechanical connection, or electrical connection; direct connection, or indirect connection through an intermediate medium, or internal connection of two elements or an interaction relationship between two elements, unless otherwise clearly defined. For those having ordinary skills in the art, the specific meanings of the above terms in the present disclosure can be understood according to specific circumstances.

The sensor device provided in the embodiments of the present disclosure may be applied to detect a bending state of a target subject. In some embodiments, the sensor device (also referred to as a bending sensor) may be connected (e.g., bonded) to the target subject (e.g., a rear hanger of an earphone, an electromyographic suit, etc.) such that the bending sensor deforms with the deformation of the target subject to detect the bending state of the target subject. Furthermore, more information related to the target subject may be determined through the bending state and intelligent operations may be performed. For example, a current placement state (e.g., a normal wearing state, an abnormal wearing state, or a free placement state) of the earphone may be analyzed by detecting a bending state of a connector between two loudspeaker components of the earphone, and then operation states of one or more electronic components (e.g., a Bluetooth module, a battery, etc.) of the earphone may be automatically adjusted according to the current placement state of the earphone, thereby saving operations for users and improving the user experience.

However, different application scenarios usually have different requirements for the performance of the bending sensor. For some scenarios, the currently used bending sensor may not meet the required performance requirements in terms of size, sensitivity, or reliability. To this end, the embodiments of the present disclosure provide a sensor device, which improves the structure of the sensor device to meet the requirements of the bending sensor in terms of size, sensitivity, and reliability.

In some embodiments, the sensor device may include a sensitive element and a substrate. A resistance value of the sensitive element may change in response to the bending of the sensor device. The substrate may be configured to carry the sensitive element. The sensitive element may include a first conductive layer and a sensitive layer. The first conductive layer may include at least two conductive units. The at least two conductive units may be arranged in a distributed manner. At least a portion of the sensitive layer may be disposed between and in contact with the at least two conductive units.

The sensor device provided in the embodiments of the present disclosure is described in detail below with reference to the accompanying drawings.

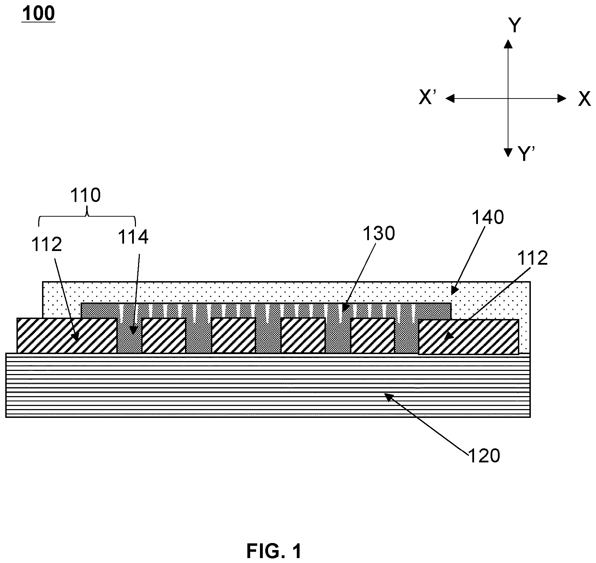

FIG. 1 is a schematic diagram illustrating a cross section of an exemplary sensor device according to some embodiments of the present disclosure.

Referring to FIG. 1, in some embodiments, a sensor device 100 may include a sensitive element 110 and a substrate 120. The substrate 120 may be configured to carry the sensitive element 110. A resistance value of the sensitive element 110 may change in response to the bending of the sensor device 100. Specifically, when the sensor device 100 is bent by an external force, an upper surface (e.g., a surface of the substrate 120 facing a direction Y in FIG. 1) of the substrate 120 is stretched or compressed, which causes the sensitive element 110 disposed on the upper surface thereof to deform, thereby causing the resistance value of the sensitive element 110 to change (e.g., increase or decrease).

In some embodiments, the sensitive element 110 may include a first conductive layer 112 and a sensitive layer 114. The first conductive layer 112 may be disposed above the substrate 120 (i.e., the surface facing the Y direction in FIG. 1), and at least a portion of the sensitive layer 114 may be disposed above the first conductive layer 112. A resistance value of the sensitive layer 114 may change with deformation of the sensitive layer 114. The first conductive layer 112 may include at least two conductive units. The at least two conductive units may be disposed in a distributed manner. In the embodiments of the present disclosure, the distributed arrangement refers to arranging a plurality of components (e.g., conductive units, sensitive units) at intervals. For example, as shown in FIG. 1, a plurality of conductive units of the first conductive layer 112 are arranged at intervals (which may also be referred to as the plurality of conductive units being arranged in a distributed manner). As another example, a plurality of sensitive units of the sensitive layer 114 are arranged at intervals (which may also be referred to as the plurality of sensitive units being arranged in a distributed manner). At least a portion of the sensitive layer 114 may be disposed between the at least two conductive units and in contact with the at least two conductive units (i.e., the sensitive layer 114 is electrically connected with the first conductive layer 112). For example, the first conductive layer 112 may include two conductive units, and the two conductive units may be disposed on left and right sides of the sensitive layer 114, respectively. In this case, the sensitive layer 114 may include one sensitive unit, and the one sensitive unit may be disposed in a gap between the two conductive units. As another example, as shown in FIG. 1, the first conductive layer 112 may include a plurality of conductive units, and the plurality of conductive units may be arranged at intervals (e.g., at equal intervals or non-equal intervals), the sensitive layer 114 may include at least two sensitive units, and the at least two sensitive units may be arranged at intervals in a gap between any two adjacent conductive units of the plurality of conductive units.

In some embodiments, referring to FIG. 1, in order to increase the sensitivity of the sensor device 100, the sensor device 100 may further include microstructures 130 disposed on the sensitive layer 114. The microstructures 130 refer to relatively small structures. For example, at least one dimension (e.g., a diameter, and a width) of each of the microstructures 130 is less than 30 $\mu$m. In some embodiments, the microstructures 130 may include micropores, slits, etc. Specifically, when the microstructures 130 include the micropores, a diameter of each of the micropores may be less than 30 $\mu$m. When the microstructures 130 include the slits, a width of each of the slits may be less than 10 $\mu$m. By providing the microstructures 130, a contact area between conductive materials inside the sensitive layer 114 may change when the sensitive layer 114 deforms, such that the sensitive layer 114 produces a greater resistance value change under the same deformation, thereby achieving the effect of improving the sensitivity of the sensor device 100.

In some embodiments, the microstructures 130 may be arranged in an array on an upper surface (i.e., a surface away from the substrate 120), and a lower surface (i.e., a surface in contact with the substrate 120) of the sensitive layer 114, or may penetrate the sensitive layer 114 from top to bottom. In some embodiments, a spacing between two adjacent microstructures 130 may be the same or different. It should be noted that, in the embodiments of the present disclosure, the microstructures 130 being disposed on the upper surface or the lower surface of the sensitive layer 114 means that openings of the microstructures 130 are located on the upper surface or the lower surface of the sensitive layer 114. When the microstructures 130 penetrate the sensitive layer 114 from top to bottom, at least two openings located on the upper surface and the lower surface of the sensitive layer 114 are connected with each other.

It should be noted that in the embodiments of the present disclosure, the resistance of the first conductive layer 112 may be approximately regarded as 0. The sensitive layer 114 may have relatively large resistance relative to the first conductive layer 112. The sensitive layer 114 may be short-circuited by the first conductive layer 112 relative to the first conductive layer 112. In other words, if the first conductive layer 112 and the sensitive layer 114 are connected in parallel to a circuit, the current may flow through the first conductive layer 112, but not through the sensitive layer 114. In some embodiments, in order to make the sensor device 100 have relatively good flexibility, the sensitive layer 114 may include a resistance paste. For example, the sensitive layer 114 may be a thin film structure printed with a resistance paste. In some embodiments, the resistance paste may be formed by mixing conductive particles with a resin matrix. Exemplary conductive particles may include carbon black, carbon nanotubes, graphene, silver powder, copper powder, etc. Exemplary resin matrixes may include epoxy resin, polyvinyl chloride (PVC), polyimide resin, phenolic resin, etc. The first conductive layer 112 may be prepared from conductive metal. For example, the first conductive layer 112 may be a metal layer printed with a conductive paste such as copper or silver. Alternatively, in some embodiments, in order to meet the flexibility requirement, the first conductive layer may be formed by a liquid conductor. It should be noted that the above content regarding the sensitive layer 114 is only an exemplary description. In some embodiments, the sensitive layer 114 may not include the resistance paste. For example, other resistance materials may be used. As another example, the sensitive layer 114 may be obtained by processing without printing, but may be directly evaporated onto the upper surface of the substrate 120 with a metal material to form a metal film in a specific region, so as to form the sensitive layer 114.

In some embodiments, a thickness of the first conductive layer 112 may be in a range of 1 $\mu$m-50 $\mu$m. Preferably, the thickness of the first conductive layer 112 may be in a range of 5 $\mu$m-20 $\mu$m. In some embodiments, a thickness of the sensitive layer 114 may be in a range of 1 $\mu$m-50 $\mu$m. In some embodiments, the thickness of the sensitive layer 114 may be greater than the thickness of the first conductive layer 112. For example, the thickness of the first conductive layer 112 may be in a range of 10 $\mu$m-15 $\mu$m, and the thickness of the sensitive layer 114 may be in a range of 15 $\mu$m-25 $\mu$m. As another example, in some embodiments, the thickness of the first conductive layer 112 may be in a range of 20 $\mu$m-30 $\mu$m, and the thickness of the sensitive layer 114 may be in a range of 30 $\mu$m-40 $\mu$m. It is understood that in the present disclosure, the above description regarding the thickness of the first conductive layer 112 and the sensitive layer 114 is only exemplary. In some embodiments, the first conductive layer 112 and the sensitive layer 114 may have other thicknesses or other thickness relationships.

In some embodiments, a local thickness of the sensitive layer 114 may be greater than the thickness of the first conductive layer 112. For example, when the first conductive layer 112 includes two conductive units disposed on the left and right sides of the sensitive layer 114, respectively, a thickness of a first portion of the sensitive layer 114 located between the two conductive units may be greater than the thickness of the first conductive layer 112. A thickness of two ends of the sensitive layer 114, i.e., a second portion located on the first conductive layer 112 (i.e., a portion located directly on the first conductive layer 112 in FIG. 1), may be less than the thickness of the first conductive layer 112. By providing the second portion of the sensitive layer 114, the sensitive layer 114 and the first conductive layer 112 may form a bayonet structure, so as to strengthen a connection relationship between the first conductive layer 112 and the sensitive layer 114, and avoid the disconnection of the first conductive layer 112 from the sensitive layer 114 during the bending process, thereby improving the mechanical reliability of the sensor device 100 to a certain extent, and facilitating the processing and preparation of the sensitive element 110.

In some embodiments, a material strength of the first conductive layer 112 may be greater than a material strength of the sensitive layer 114. With the bayonet structure, the sensitive layer 114 may also be squeezed or stretched by the first conductive layer 112 disposed at the two ends thereof during the bending process, so as to improve the sensitivity of the sensitive layer 114 in response to the change in the bending degree of the sensor device 100 to a certain extent.

In some embodiments, the sensor device 100 may include a connection terminal to feed back a sensor signal (e.g., a resistance value or a change in the resistance value) of the sensor device 100 (e.g., the sensitive element 110 or the sensitive layer 114) to an external circuit (e.g., a processing circuit). Further, the external circuit may generate a signal indicating a bending state of the sensor device 100 or the target subject based on the sensor signal of the sensor device 100. In some embodiments, the two conductive units disposed at two end edges of the first conductive layer 112 may serve as connection terminals and feed back the resistance value or the change in the resistance value of the sensitive element 110 to the external circuit (e.g., the processing circuit) for processing.

In some embodiments, referring to FIG. 1, the sensor device 100 may further include a protective layer 140. The protective layer 140 may be configured to at least cover the sensitive layer 114 to protect the sensitive layer 114. In some embodiments, the protective layer 140 may also be configured to cover the sensitive layer 114 and the first conductive layer 112 simultaneously and be connected to the substrate 120, so as to strengthen the connection between the sensitive layer 114 and the first conductive layer 112 while protecting the sensitive layer 114 and the first conductive layer 112, and avoid the disconnection of the sensitive layer 114 from the first conductive layer 112 during the bending deformation, thereby further improving the mechanical reliability of the sensor device 100. In some embodiments, the protective layer 140 may be configured to cover the entire outer surface of the sensor device 100, so as to provide comprehensive protection for the sensor device 100.

In some embodiments, the protective layer 140 may include a flexible insulating film, and the material of the flexible insulating film may include insulating resin materials such as PI and PVC. In some embodiments, the protective layer 140 may also include insulating three-proof paint or insulating ink. In some embodiments, in order to miniaturize the sensor device 100 as much as possible, the thickness of the protective layer 140 may be controlled to be within 100 $\mu$m. Preferably, the thickness of the protective layer 140 may be controlled to be within 50 $\mu$m. In some embodiments, in order to reduce the obstruction of the protective layer 140 to the deformation of the sensitive layer 114, a Young's modulus of the protective layer 140 may be less than a Young's modulus of the sensitive layer 114. For example, a ratio of the Young's modulus of the protective layer 140 to the Young's modulus of the sensitive layer 114 may not be greater than 1/10. Preferably, the ratio of the Young's modulus of the protective layer 140 to the Young's modulus of the sensitive layer 114 may not be greater than 1/100.

It should be noted that, in the embodiments of the present disclosure, the substrate 120 may be made of a flexible material, such as polyimide (PI), polyethylene terephthalate (PET), etc. In some embodiments, in order to reduce the influence of the protective layer 140 on the deformation of the substrate 120, the Young's modulus of the protective layer 140 may be less than a Young's modulus of the substrate 120. Preferably, a ratio of the Young's modulus of the protective layer 140 to the Young's modulus of the substrate 120 may not be greater than 1/100. In some embodiments, the first conductive layer 112 may be provided on the substrate 120 in the form of a coating.

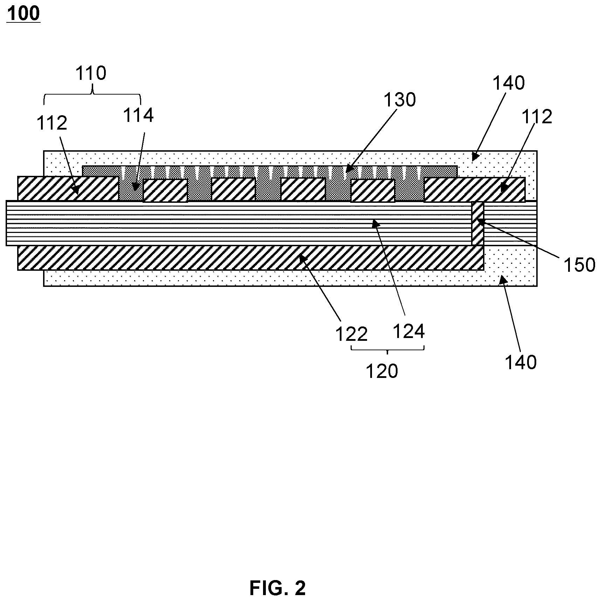

FIG. 2 is a schematic diagram illustrating a cross section of another exemplary sensor device according to some embodiments of the present disclosure.

In some embodiments, the substrate 120 may be compounded by multilayer materials. The substrate 120 may include at least a second conductive layer 122 and a base layer 124. The second conductive layer 122 may be conducted (i.e., electrically connected) with the first conductive layer 112 (e.g., a conductive unit on a right side of FIG. 2). For example, referring to FIG. 2, the substrate 120 may include the base layer 124 and the second conductive layer 122 that are arranged from top to bottom. The base layer 124 may include a through hole 150. The first conductive layer 112 and the second conductive layer 122 may be conducted through the through hole 150. It should be noted that by providing the through hole 150, the first conductive layer 112 and the second conductive layer 122 are arranged in layers (i.e., the first conductive layer 112 and the second conductive layer 122 are not in the same plane), the width of the sensor device 100 may be reduced (e.g., compared with FIG. 1, the width of the sensor device 100 in a direction perpendicular to an XX'YY' plane may be reduced), such that the sensor device 100 has a smaller volume, thereby meeting the miniaturization requirements in a specific scenario.

In some embodiments of the present disclosure, the base layer 124 may be a flexible film. For example, the material of the flexible film may include polyimide (PI), polyethylene terephthalate (PET, commonly known as polyester resin), etc. In some embodiments, a thickness of the base layer 124 may be in a range of 10 $\mu$m-500 $\mu$m. Preferably, the thickness of the base layer 124 may be in a range of 100 $\mu$m-400 $\mu$m. It is understood that the above description of the thickness of the base layer 124 is only an exemplary description, and in some embodiments, the base layer 124 may have other thicknesses.

In some embodiments, under the same bending degree, the thicker the base layer 124, the greater the deformation of the sensitive layer 114 produced, and the higher the sensitivity of the sensitive layer 114. Therefore, in some embodiments, the thickness of the base layer 124 may be set by comprehensively considering the size requirements and the sensitivity requirements of the sensor device 100.

The second conductive layer 122 may be similar to the first conductive layer 112, and may be configured to electrically connect with a conductive unit located at one end of the sensitive layer 114 in the first conductive layer 112, so as to form a connection terminal connected to an external circuit. It should be noted that, with the second conductive layer 122, the position of the connection terminal of the sensitive layer 114 may be changed, thereby improving the mounting adaptability of the sensor device 100. Specifically, the second conductive layer 122 may be conducted with the sensitive layer 114 to extend the connection terminal of the sensitive layer 114 to another position. For example, in some embodiments, one end of the second conductive layer 122 may be electrically connected with the conductive unit in the first conductive layer 112 that is located at one end of the sensitive layer 114, and the other end of the second conductive layer 122 may extend to the vicinity of a conductive unit in the first conductive layer 112 that is located at the other end of the sensitive layer 114, such that the two connection terminals of the sensitive layer 114 connected to the external circuit may be close to each other to facilitate connection to the external circuit.

Referring to FIG. 2, in some embodiments, a side of the second conductive layer 122 away from the base layer 124 may include the protective layer 140. The protective layer 140 may be configured to protect the second conductive layer 122 to prevent the second conductive layer 122 from contacting other elements to cause interference to the detection signal of the sensor device 100.

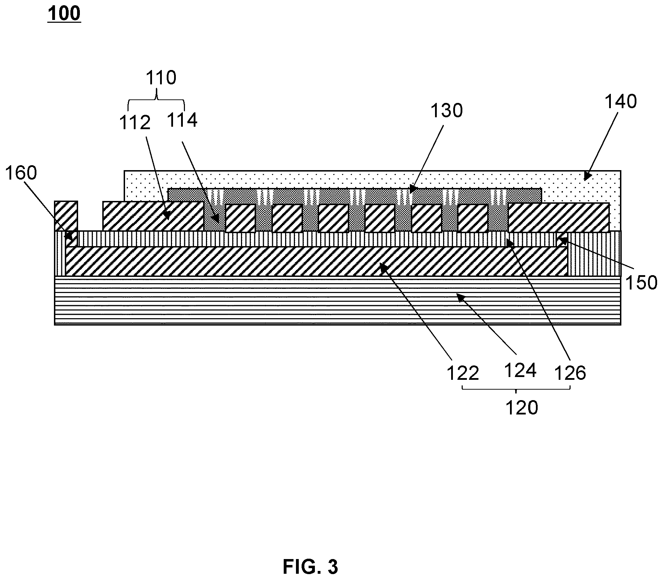

FIG. 3 is a schematic diagram illustrating a cross section of another exemplary sensor device according to some embodiments of the present disclosure.

In some embodiments, referring to FIG. 3, the substrate 120 may include an insulating layer 126, the second conductive layer 122, and the base layer 124 that are arranged in sequence from top to bottom. The insulating layer 126 may be made of an insulating material. For example, the insulating layer 126 may be an insulating film made of a polyester film, etc. With this arrangement, the sensitive layer 114, the first conductive layer 112, the insulating layer 126, and the second conductive layer 122 may all be located on the same side of the base layer 124 for ease of processing. For example, a single-sided additive process (e.g., screen printing or spraying) may be used without punching holes in the base layer 124. As another example, a flexible printed circuit (FPC) may be used as the substrate 120, and the sensitive element 110 may be disposed on the FPC board by printing or spraying to prepare the sensor device 100. In some embodiments, a thickness of the insulating layer 126 may be in a range of 1 $\mu$m-100 $\mu$m. Preferably, the thickness of the insulating layer 126 may be in a range of 5 $\mu$m-30 $\mu$m.

As shown in FIG. 3, in some embodiments, the insulating layer 126 may include a through hole 150. The through hole 150 may be configured to conduct the first conductive layer 112 and the second conductive layer 122. Specifically, the second conductive layer 122 may be electrically connected with a conductive unit disposed at an edge (e.g., the rightmost side in FIG. 3) of the first conductive layer 112 through the through hole 150 to form a connection terminal for connecting to an external circuit, so as to change the position of the connection terminal of the sensitive layer 114. In some embodiments, a conductive unit disposed at one end of the first conductive layer 112 (e.g., disposed at the leftmost side in FIG. 3) may form a connection terminal of the sensitive layer 114, and the second conductive layer 122 may form another connection terminal of the sensitive layer 114. In some embodiments, the two connection terminals may be disposed at any position as required. For example, in some embodiments, in order to facilitate connection with the external circuit, the two connection terminals may be disposed at positions close to each other. As another example, in some embodiments, in order to facilitate arrangement, the two connection terminals may be disposed at two ends of the sensitive layer 114.

In some embodiments, the two connection terminals may be located at different planes, or may extend to be located at the same plane. For example, referring to FIG. 3, in some embodiments, in order to facilitate connecting the sensor device 100 to the external circuit, the insulating layer 126 may further include a second through hole 160. The second conductive layer 122 may further extend to a plane where the first conductive layer 112 is located through the second through hole 160, such that the connection terminal formed by the first conductive layer 112 and the connection terminal formed by the second conductive layer 122 are located at the same plane.

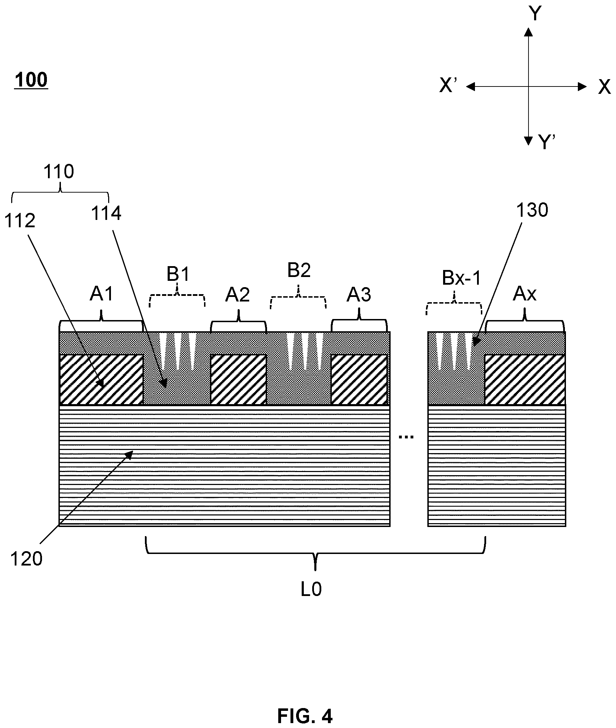

FIG. 4 is a schematic diagram illustrating a cross section of another exemplary sensor device according to some embodiments of the present disclosure.

Referring to FIG. 4, in some embodiments, in order to increase the sensitivity of the sensor device 100, the sensitive layer 114 may include at least two sensitive units. In this case, the first conductive layer 112 may include three or more conductive units. The at least two sensitive units may be spaced apart from and in contact with the three or more conductive units of the first conductive layer 112. The more the sensitive units and the conductive units, the higher the sensitivity of the sensor device 100.

As shown in FIG. 4, in some embodiments, the sensitive layer 114 may include a B1 segment, a B2 segment, ..., and a Bx-1 segment each of which may be regarded as a sensitive unit of the sensitive layer 114. The first conductive layer 112 may include an A1 segment, an A2 segment, an A3 segment, ..., and an Ax segment each of which may be regarded as a conductive unit of the first conductive layer 112. The sensitive units corresponding to the B1 segment, the B2 segment, ..., and the Bx-1 segment may be spaced apart from and in contact with the conductive units corresponding to the A1 segment, the A2 segment, the A3 segment, ... and the Ax segment. In some embodiments, the conductive units corresponding to the A1 segment and the Ax segment may serve as the connection terminals of the sensitive element 110.

Referring to FIG. 4, in some embodiments, the sensitive layer 114 may further include an A1 segment, an A2 segment, an A3 segment, ..., and an Ax segment. The sensitive units corresponding to the A1 segment, the A2 segment, the A3 segment, ..., and the Ax segment may be disposed on the conductive units corresponding to the A1 segment, the A2 segment, the A3 segment, ..., and the Ax segment, and connected with the sensitive units corresponding to the B1 segment, the B2 segment, ..., and the Bx-1 segment, thereby strengthening the connection strength between the sensitive units of the sensitive layer 114 and the conductive units of the first conductive layer 112 to a certain extent, and preventing the sensitive units and the conductive units from breaking and separating from each other during the bending process.

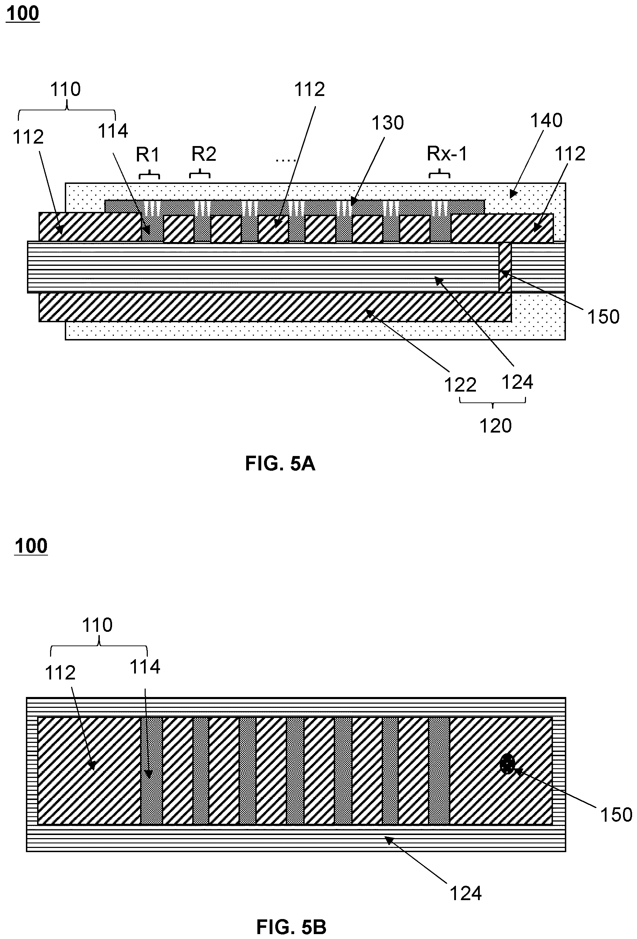

In some embodiments, the sensitive units of the sensitive layer 114 may have the same or different shapes and/or areas, and a spacing between any two adjacent conductive units may be equal or unequal. Similarly, the conductive units of the first conductive layer 112 may have the same or different shapes and/or areas, and a spacing between any two adjacent sensitive units may be equal or unequal. It should be noted that in the present disclosure, the shapes and/or the areas of the sensitive units refer to the shapes and/or the areas in the diagram of the cross section of the sensor device 100 (e.g., FIGs. 1-4, and FIG. 5A), or the shapes and/or the areas in the top view of the sensor device 100 (e.g., FIG. 5B).

In some embodiments, in order to ensure the consistency of the sensor device 100, i.e., to make each position of the sensor device 100 produce the same response in case of the same bending, each sensitive unit may be set to have the same shape and area, and each conductive unit may also be set to have the same shape and area, and any two adjacent conductive units may have the same spacing.

In some embodiments, the shape and the area of each sensitive unit and/or conductive unit and/or the spacing between any two adjacent sensitive units and/or any two adjacent conductive units may be set according to the needs of an application scenario. In some embodiments, if it is only necessary to obtain the overall output characteristics of the sensor device 100 without obtaining the deformation of each position, each sensitive unit and/or each conductive unit may be set to have a different shape, or have a different area, or the spacing between any two adjacent sensitive units and/or any two adjacent conductive units may be set to be unequal. For example, when the sensor device 100 is applied to a rear hanger of a bone conduction earphone, it is not necessary to obtain the specific deformation of each position of the rear hanger of the bone conduction earphone, but only to measure total deformation of the rear hanger of the bone conduction earphone, then each sensitive unit and/or each conductive unit may be to have a different shape, or have a different area, or the spacing between any two adjacent sensitive units and/or any two adjacent conductive units may be set to be unequal. For example, the sensor device 100 may be set in a middle position of the rear hanger of the bone conduction earphone, and a spacing between two adjacent sensitive units and/or two adjacent conductive units near the middle position may be less than a spacing between two adjacent sensitive units and/or two adjacent conductive units away from the middle position. In other words, an arrangement density of the sensitive units and/or the conductive units near the middle position of the rear hanger of the bone conduction earphone may be greater than an arrangement density of the sensitive units and/or the conductive units away from the middle position of the rear hanger of the bone conduction earphone, thereby improving the overall sensitivity of the sensor device 100. In some embodiments, when it is necessary to understand the local output characteristics of the sensor device 100, each sensitive unit and/or each conductive unit may be set to have the same shape, or have the same area, or the spacing between any two adjacent sensitive units and/or any two adjacent conductive units may be set to be equal. For example, when the sensor device 100 is applied to an electromyographic suit, in order to accurately understand the force and movement of each muscle of a user, it is necessary to understand the specific deformation of each position of the electromyographic suit under the same force, then each sensitive unit and/or each conductive unit may be set to have the same shape, or have the same area, or the spacing between any two adjacent sensitive units and/or any two adjacent conductive units may be set to be equal.

Referring to FIG. 4, when the sensitive layer 114 includes a plurality of sensitive units corresponding to the A1 segment, A2 segment, A3 segment, ..., the Ax segment, the B1 segment, B2 segment, ..., and the Bx-1 segment, the microstructures 130 may be disposed on upper surfaces (i.e., an upper surface of a sensitive unit located between two adjacent conductive units) or lower surfaces of the sensitive units corresponding to the B1 segment, the B2 segment, ..., and the Bx-1 segment, or penetrate through the sensitive layer 114 from top to bottom. It should be noted that, in some embodiments, the microstructures 130 may also be disposed on the sensitive units corresponding to the A1 segment, the A2 segment, the A3 segment, ..., and the Ax segment. For example, in some embodiments, due to the influence of the preparation process, when the microstructures 130 are processed on the sensitive units corresponding to the B1 segment, the B2 segment, ..., and the Bx-1 segment, some microstructures 130 may also be generated on the sensitive units corresponding to the A1 segment, the A2 segment, the A3 segment, ..., and the Ax segment.

FIG. 5A is a schematic diagram illustrating a cross section of an exemplary sensor device according to some embodiments of the present disclosure. FIG. 5B is a top view of the sensor device corresponding to FIG. 5A.

Referring to FIG. 4 and FIG. 5A, in some embodiments, resistance values of sensitive units in the sensitive layer 114 corresponding to the B1 segment, the B2 segment, ..., and the Bx-1 segment may be expressed as $R_1$, $R_2$, ..., and $R_{x-1}$, respectively. Since sensitive units corresponding to the A1 segment, the A2 segment, the A3 segment, ..., and the Ax segment can be short-circuited by conductive units corresponding to the A1 segment, the A2 segment, the A3 segment, ..., and the Ax segment, the sensitive units corresponding to the A1 segment, the A2 segment, the A3 segment, ..., and the Ax segment may not contribute to the resistance of the sensitive element 110. Therefore, total resistance $R_0$ of the sensitive element 110 may be expressed as formula (1):

$$R_0 = R_1 + R_2 + \ldots + R_{x-1.} \ (1)$$

Assuming that the size of each conductive unit (except the conductive units on the left and right edges) connected between a plurality of sensitive units in an XX' direction is equal and denoted as a, and the size of each sensitive unit in the XX' direction is equal and denoted as b (i.e., an interval between two adjacent conductive units is denoted as b), an effective measurement length L0 corresponding to the sensitive layer 114 may be determined according to formula (2):

$$L0 = (x-2)^*a + (x-1)^*b. \ (2)$$

A total length Ls of the sensitive units contributing to the resistance of the sensitive element 110 may be determined according to formula (3):

$$Ls = (x-1) * b. \ (3)$$

When square resistance Rf (which is determined by the material, the thickness and the microstructures of the sensitive layer 114) and the total resistance R0 of the sensitive layer 114 are constant, if the width (i.e. the size of the sensitive layer 114 in a direction perpendicular to an XX'YY' plane) of the sensitive layer 114 (or the sensitive units) is denoted as w, according to formula (4):

$$R_0 = Rf*Ls/w, \quad (4)$$

it can be seen that when an effective measurement length L0 is constant, by setting the conductive units and the sensitive units at intervals, the total length Ls of the sensitive units contributing to the resistance in the sensitive element 110 can be adjusted to make the width of the sensitive layer 114 (or the sensitive units) meet the actual needs. For example, in an application scenario where a small-sized bending sensor is required, if the total resistance R0 is constant, the total length Ls of the sensitive units contributing to the resistance in the sensitive element 110 can be reduced to make the sensitive layer 114 have a smaller width (i.e., the size of the sensitive layer 114 in a vertical direction in FIG. 5B), thereby making the size of the prepared sensor device 100 smaller and realizing miniaturized application.

Referring to FIG. 5B, in some embodiments, the first conductive layer 112 and the sensitive layer 114 may have the same width (i.e., the size in the vertical direction in FIG. 5B). An area of the conductive units disposed at two ends of the sensitive layer 114 in the first conductive layer 112 may be greater than an area of the conductive unit disposed between the two adjacent sensitive units.

It should be noted that FIG. 5B is only an exemplary illustration. In some embodiments, the sensor device 100 may have other structures. For example, the first conductive layer 112 and the sensitive layer 114 may have different widths. As another example, the sensitive layer 114 may include sensitive units disposed on the conductive units. The sensitive units disposed on the conductive units may be configured to connect the sensitive units located between the conductive units in series to form the sensitive layer 114 with a fluctuating thickness, and make the stress and strain of the sensitive layer 114 be mainly concentrated in a region (i.e., the sensitive units corresponding to the B1 segment, the B2 segment, ..., and the Bx-1 segment) between the conductive units when the sensor device 100 is bent, thereby improving the sensitivity of the sensor device 100 to a certain extent. In some embodiments, in order to achieve the same purpose, i.e., to make the stress and strain of the sensitive layer 114 be mainly concentrated in the region between the conductive units, structures similar to the microstructures 130, such as micropores or slits, may also be provided at a position of the substrate 120 corresponding to the sensitive layer 114. It can be understood that since the substrate 120 serves as a carrier for the deformation of the sensitive layer 114, by setting the structures similar to the microstructures 130 at the position of the substrate 120 corresponding to the sensitive layer 114, the stress and strain at the position of the substrate 120 corresponding to the sensitive layer 114 can be increased, thereby increasing the stress and strain at the corresponding position of the sensitive layer 114.

It should also be noted that certain features, structures or characteristics in one or more embodiments of the present disclosure may be appropriately combined on the premise of conflict.

The beneficial effects that may be brought about by the embodiments of the present disclosure include but are not limited to the following content. (1) By arranging the first conductive layer and the second conductive layer in layers (i.e., the first conductive layer and the second conductive layer are not in the same plane), the width of the sensor device can be reduced, such that the sensor device can have a smaller size. (2) By forming the bayonet structure at the connection between the sensitive layer and the first conductive layer, the connection relationship between the first conductive layer and the sensitive layer can be strengthened to prevent the first conductive layer and the sensitive layer from being disconnected during the bending process, thereby improving the mechanical reliability of the sensor device. (3) By arranging the microstructures on the surface of the sensitive layer, the contact area and gap size between the conductive materials of the sensitive layer (or the sensor device) can be changed accordingly when the sensitive layer (or the sensor device) deforms, thereby generating a larger resistance value change under the same deformation, and improving the sensitivity of the sensor device in response to the change in the bending degree. (4) By segmenting the first conductive layer and the sensitive layer to obtain the plurality of conductive units and the plurality of sensitive units, and arranging the plurality of sensitive units and the plurality of conductive units of the first conductive layer to be spaced and in contact with each other, the stress and strain of the sensitive layer can be mainly concentrated in the region between the conductive units when the sensor device is bent, so as to further improve the sensitivity of the sensor device. (5) By segmenting the first conductive layer and the sensitive layer to obtain the plurality of conductive units and the plurality of sensitive units, the width of the sensitive unit (or the sensor device) can be reduced by reducing the total length of the sensitive units contributing to the total resistance while maintaining the total resistance constant, thereby realizing miniaturization application.

It should be noted that different embodiments may produce different beneficial effects. In different embodiments, the beneficial effects that may be produced may be any one or a combination of the above, or any other beneficial effects that may be obtained.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by the present disclosure and are within the spirit and scope of the exemplary embodiments of the present disclosure.

**Claims**

1. A sensor device, comprising:

a sensitive element including a first conductive layer and a sensitive layer, wherein the first conductive layer includes at least two conductive units, the at least two conductive units are arranged in a distributed manner, at least a portion of the sensitive layer is disposed between and in contact with the at least two conductive units, and a resistance value of the sensitive element changes in response to bending of the sensor device; and
a substrate configured to carry the sensitive element.

2. The sensor device of claim 1, wherein the first conductive layer is disposed above the substrate, and the sensitive layer is at least partially disposed above the first conductive layer.

3. The sensor device of claim 1 or 2, wherein a thickness of the first conductive layer is in a range of 1 $\mu$m-50 $\mu$m.

4. The sensor device of any one of claims 1-3, wherein a thickness of the sensitive layer is in a range of 1 $\mu$m-50 $\mu$m.

5. The sensor device of any one of claims 1-4, wherein the sensitive layer includes a resistance paste, the resistance paste being formed by mixing conductive particles with a resin matrix.

6. The sensor device of any one of claims 1-5, wherein microstructures are disposed on the sensitive layer, the microstructures including micropores or slits.

7. The sensor device of claim 6, wherein a diameter of each of the micropores is less than 30 $\mu$m, and a width of each of the slits is less than 10 $\mu$m.

8. The sensor device of any one of claims 1-7, wherein the sensitive layer includes at least two sensitive units, the at least two conductive units including three or more conductive units, the at least two sensitive units and the three or more conductive units being spaced apart from each other and arranged in contact with each other.

9. The sensor device of claim 8, wherein the three or more conductive units have the same shape and area, and a spacing between any two adjacent conductive units of the three or more conductive units is equal.

10. The sensor device of any one of claims 1-9, wherein the substrate includes a base layer and a second conductive layer that are arranged from top to bottom, a through hole being disposed on the base layer and configured to conduct the first conductive layer and the second conductive layer.

11. The sensor device of claim 10, wherein a thickness of the base layer is in a range of 10 $\mu$m-500 $\mu$m.

12. The sensor device of any one of claims 1-9, wherein the substrate includes an insulating layer, a second conductive layer, and a base layer that are arranged in sequence from top to bottom, a through hole being disposed on the insulating layer and configured to conduct the first conductive layer and the second conductive layer.

13. The sensor device of claim 12, wherein a thickness of the insulating layer is in a range of 1 $\mu$m-100 $\mu$m.

14. The sensor device of any one of claims 1-13, further comprising:
a protective layer configured to cover an outer surface of the sensor device to protect the sensor device.

15. The sensor device of claim 14, wherein a thickness of the protective layer is less than 100 $\mu$m.

<u>100</u>

FIG. 1

**100**

FIG. 2

FIG. 3

**100**

Y

X' ← → X

Y'

110

112    114

130

A1    B1    A2    B2    A3    Bx-1    Ax

120

L0

**FIG. 4**

100

110
112      114
112      R1   R2   ....        130        Rx-1        140        112
150

122    124

120

**FIG. 5A**

100

110
112      114
150

124

**FIG. 5B**

## INTERNATIONAL SEARCH REPORT

| International application No. |
| --- |
| **PCT/CN2022/129820** |

### A. CLASSIFICATION OF SUBJECT MATTER

G01B7/16(2006.01)i; G01L1/22(2006.01)i; G01L1/20(2006.01)i; G01N27/04(2006.01)i

According to International Patent Classification (IPC) or to both national classification and IPC

### B. FIELDS SEARCHED

Minimum documentation searched (classification system followed by classification symbols)

IPC: G01B7/-; G01L1/-; G01N27/-

Documentation searched other than minimum documentation to the extent that such documents are included in the fields searched

Electronic data base consulted during the international search (name of data base and, where practicable, search terms used)

CNTXT; CNKI: 传感, 敏感, 弯曲, 弯折, 曲折, 变形, 电阻, 改变, 变化, 导电, 电极, 分布式, 分散, 间隔, 阵列; VEN; ENTXT; IEEE: sense, bend, twist, deformation, resistance, change, electric, conduct, electrode, distributed, disperse, interval, array

### C. DOCUMENTS CONSIDERED TO BE RELEVANT

| Category* | Citation of document, with indication, where appropriate, of the relevant passages | Relevant to claim No. |
| --- | --- | --- |
| X | CN 109640516 A (AVARY HOLDING (SHENZHEN) CO., LTD. et al.) 16 April 2019 (2019-04-16)<br>description, paragraphs [0038]-[0092], and figures 8-10 | 1-15 |
| X | CN 106595469 A (KUNSHAN NEW FLAT PANEL DISPLAY TECHNOLOGY CENTER CO., LTD. et al.) 26 April 2017 (2017-04-26)<br>description, paragraphs [0019]-[0025], and figures 1-2 | 1-9, 14-15 |
| X | US 2012256720 A1 (SAMSUNG ELECTRONICS CO., LTD.) 11 October 2012 (2012-10-11)<br>description, paragraphs [0033]-[0043] and [0057]-[0060], and figures 1-3 and 11A-11D | 1-9, 14-15 |
| A | CN 107907251 A (SHENZHEN INSTITUTE OF ADVANCED TECHNOLOGY) 13 April 2018 (2018-04-13)<br>entire document | 1-15 |
| A | CN 110806429 A (YINHU INNOVATION AND ENTREPRENEURSHIP RESEARCH INSTITUTE OF ZHEJIANG UNIVERSITY OF TECHNOLOGY FUYANG DISTRICT HANGZHOU et al.) 18 February 2020 (2020-02-18)<br>entire document | 1-15 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 June 2023** | **13 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/129820** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2009198483 A (TOKAI RUBBER INDUSTRIES, LTD.) 03 September 2009 (2009-09-03) entire document | 1-15 |

Form PCT/ISA/210 (second sheet) (July 2022)

**INTERNATIONAL SEARCH REPORT**
Information on patent family members

International application No.

**PCT/CN2022/129820**

| Patent document cited in search report | | | Publication date (day/month/year) | Patent family member(s) | | | Publication date (day/month/year) |
|---|---|---|---|---|---|---|---|
| CN | 109640516 | A | 16 April 2019 | TW | 201918838 | A | 16 May 2019 |
| | | | | TW | 668606 | B1 | 11 August 2019 |
| | | | | CN | 109640516 | B | 16 November 2021 |
| CN | 106595469 | A | 26 April 2017 | None | | | |
| US | 2012256720 | A1 | 11 October 2012 | KR | 20120114961 | A | 17 October 2012 |
| | | | | KR | 101878251 | B1 | 13 July 2018 |
| | | | | US | 8547197 | B2 | 01 October 2013 |
| CN | 107907251 | A | 13 April 2018 | CN | 107907251 | B | 16 April 2020 |
| CN | 110806429 | A | 18 February 2020 | None | | | |
| JP | 2009198483 | A | 03 September 2009 | None | | | |

Form PCT/ISA/210 (patent family annex) (July 2022)